# EUROPEAN PATENT SPECIFICATION

(11) **EP 2 786 851 B1**
(45) Date of publication and mention of the grant of the patent: **05.06.2019**
(21) Application number: 13305430.4
(22) Date of filing: 03.04.2013
(51) Int. Cl.: B29C 44/12, B29C 33/00, B29C 44/58, B29K 75/00, B29L 31/30, B29K 623/00, B29L 9/00

(54) **Method for manufacturing a sound-absorbing element, in particular for a motor vehicle**
Verfahren zur Herstellung eines schallabsorbierenden Elements, insbesondere für ein Kraftfahrzeug
Procédé de fabrication d'un élément d'insonorisation, en particulier pour un véhicule automobile

(43) Date of publication of application: 08.10.2014
(73) Proprietor: Faurecia Automotive Industrie, 92000 Nanterre (FR)
(72) Inventor: Elszyn, Lukasz, 59-216 SPALONA (PL); Langiny, Michel, 08140 POURU ST REMY (FR)
(74) Representative: Lavoix

(56) References cited:
- EP-A1- 2 052 833
- EP-A1- 2 556 937
- DE-A1- 4 132 571
- DE-A1- 10 034 009
- DE-U1-202009 006 239
- JP-A- H07 285 138
- US-A- 5 096 403

## Description

The invention relates to a method for manufacturing a sound-absorbing element, in particular for a motor vehicle. As an example, such a sound-absorbing element is intended to form a lining for a floor panel, for a dash inner or for any other inner part of a motor vehicle.

A sound-absorbing element is well known from prior art. Such a sound-absorbing element, called of a "mass/spring" type, comprises a heavy layer and foam associated together.

The heavy layer is generally made of a sheet having an area density between 1 and 8 kg/m², and a density of about 2000*kg*/*m*³. This heavy layer comprises a first face, and a second face opposite to the first face.

The foam is assembled to the heavy layer on said second face.

In some cases, the sound-absorbing element comprises at least one through aperture, intended to allow passage of a component, such as a ventilation air duct. In such a case, it is usually necessary to provide a seal element around the through aperture, said seal being fastened on the first face of the heavy layer. Such a seal is intended to prevent sound or air leakage between said component and the outline of the through aperture.

A method for manufacturing such a sound-absorbing element is well known from prior art. For instance, DE 41 32 571 disclose a known method of manufacturing an element.

Such a method comprises a moulding operation, comprising a step of arranging a heavy layer in a mould device, and a step of injecting foam in the mould device so as to assemble the injected foam with the second face of the heavy layer.

The method then comprises an operation of bringing and fastening a seal element onto the first face of the heavy layer, around the through aperture. Generally, the seal element is glued on the heavy layer. This operation is usually manually conducted. Thus, this operation can be long and expensive to conduct. Moreover, the position of a manually fastened seal may not be as accurate as desired.

The invention aims to solve these problems, by proposing a method for manufacturing a sound-absorbing element comprising a seal element, without an additional operation of bringing and fastening this seal element onto the heavy layer.

To this end, the invention relates to a method according to claim 1.

This method allows the seal element to be realized during the same moulding operation as the foam. More particularly, the seal element is made of the same material as the foam.

Besides, the position of the seal element is set by the recess, so that the method according to the invention allows the seal element to be correctly positioned. In other words, the method of the invention involves a better result than a method from prior art, and it is faster and less expensive.

Optionally, a method according to the invention may comprise any of the following features, taken alone or in any possible combination.
- The method comprises, before the step of arranging the heavy layer onto said reception area, a step of heating the heavy layer, so as to have this heavy layer deformable.
- The method comprises, after the step of arranging the heavy layer onto the reception area, a step of pressing this heavy layer against this reception area, for instance by creating a vacuum between the heavy layer and the first mould part.

A mould device is known from DE 100 34 009. However, such a mould device is not adapted for performing the method of manufacturing of the invention.

Thus, the invention also relates to a mould device according to claim 4.

Such a mould device is adapted for performing the previously disclosed method.

Optionally, a mould device according to the invention can comprise any of the following features, taken alone or in any possible combination.
- The mould device comprises means for pressing the heavy layer against the reception area, for instance means for creating a vacuum between the heavy layer and the first mould part.
- The mould device comprises: first heating means for heating a first area of the first mould part, corresponding to the recess, and second heating means for heating a second area of the first mould part, corresponding to the rest of the reception area.
- The first mould part comprises a first cutting element arranged in the recess, and the second mould part comprises a second cutting element, complementary to the first cutting element, arranged in front of this first cutting element when the first and second mould part are assembled together.
- The first and second mould part can be assembled in first and second position, so that: when an heavy layer is arranged on the reception area, the second cutting element is in contact with this heavy layer when the first and second mould part are assembled in the first position, and the second cutting element is engaged with the first cutting element when the first and second mould part are assembled in the second position.
- The second mould part comprises at least one strut element, protruding towards first mould part, each strut element being preferentially arranged around the recess.

The invention also related to a sound-absorbing element according to claim 10

Other aspects and advantages of the invention will become apparent on reading the following description, which is given by way of example and refers to the attached drawings in which:
- Figure 1 is a partial view in perspective of a sound-absorbing element according to an example of embodiment of the invention;
- Figure 2 is a view from rear of the sound-absorbing element of figure 1, showing a foam side of this sound-absorbing element;
- Figure 3 is a partial view from front of the sound-absorbing element of figure 1, showing a heavy layer side of this sound-absorbing element;
- Figure 4 is a partial section of mould device for manufacturing the sound-absorbing element of figure 1, according to an example of embodiment of the invention;
- Figure 5 is a view in perspective of a punch element equipping the mould part of figure 4;
- Figure 6 is a partial view in perspective from front of a lower part of the mould device of figure 4;
- Figure 7 is a partial view in perspective from front of a top part of the mould device of figure 4;

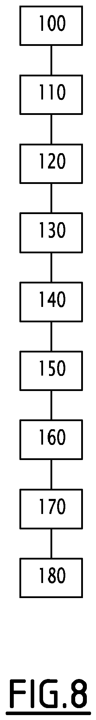

- Figure 8 is a schematic representation of steps of a method of manufacturing the sound-absorbing element of figure 1 by means of the mould device of figure 4.

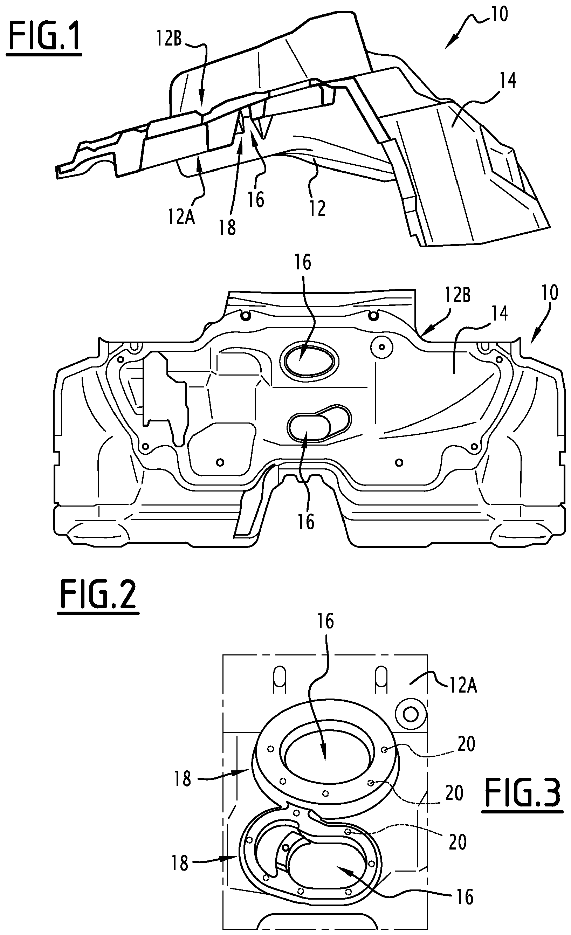

With reference to Figures 1 to 3, we describe a sound-absorbing element 10, in particular for a motor vehicle. For instance, this sound-absorbing element 10 is intended to form a lining for a dash inner of a motor vehicle. Such a dash inner is intended to be arranged between a passenger compartment and a motor compartment of the vehicle, so that this sound-absorbing element 10 is intended to absorb at least a part of sounds that comes from the motor towards the passenger compartment.

The sound-absorbing element 10 is of the "mass/spring" type, that is it comprises a heavy layer 12 and foam 14 associated together.

In a standard manner, the heavy layer 12 is made of a sheet having an area density between 1 and 8 kg/m², and a density of about 2000*kg*/*m*³. For instance, this heavy layer is made of a thermoplastic material based on polyolefin, on copolymer of ethylene and vinyl acetate, on an Ethylene Propylene Diene Monomer (EPDM) or on a mixture of these polymers. It also preferably includes fillers based on chalk or on barium sulphate.

The heavy layer 12 comprises a first face 12A, intended to be turned towards the passenger compartment of the motor vehicle, and a second face 12B, opposite to the first face 12A, intended to be turned towards the motor compartment.

More particularly, the second face 12B is turned towards a noise source, and the first face 12A is turned towards an area intended to be sound-isolated relating to said noise source.

In a standard manner, the foam 14 is assembled on the second face 12B of the heavy layer 12. Preferably, the foam is made of Polyurethane (PU).

The sound-absorbing element 10 has at least a through aperture 16, for instance two through apertures 16, each intended to allow a component to pass through this sound-absorbing element 10.

Naturally, each through aperture in the sound-absorbing element 10 corresponds to a through aperture in the heavy layer 12 and to a through aperture in the foam 14. Each through aperture 16 in the heavy layer 12 is more precisely shown on figure 2, seen from the side of the second face 12B, and on figure 3, seen from the side of the first face 12A.

In order to prevent sound or air leakage between said component and the outline of the aperture 16, sound-absorbing element 10 comprises a seal element 18 for each aperture 16.

Said seal element 18 is made of a part of foam fastened to the first face 12A of the heavy layer 12, around the aperture 16. Thus, the seal element 18 is ring shaped.

According to the invention, the heavy layer 12 has at least one through hole 20 near the through aperture 16, as shown on figure 3. The foam 14 fastened to the second face 12B of the heavy layer 12 is connected to the seal element 18 fastened to the first face 12A, through this through hole 20. Thus, the seal element 18 is made of the same material as the foam 14. It should be noticed that this material (PU) is well adapted for a sealing function against sound or air leakages.

Preferably, the heavy layer 12 has a plurality of through holes 20, distributed around each through aperture 16, so that the seal element 18 is homogeneously arranged around the through aperture 16, as specified later. For instance, each hole 20 is separated from adjacent other holes 20 by a distance of about 5 cm.

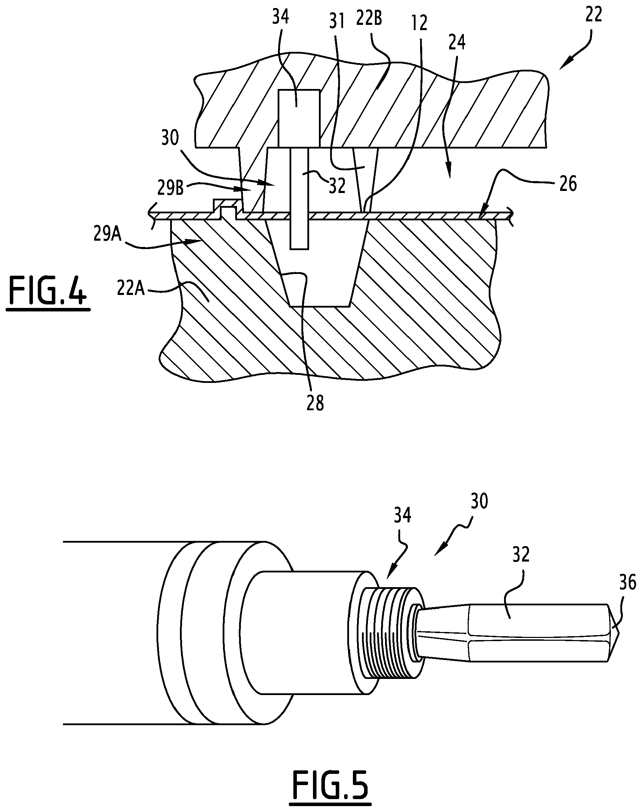

A mould device 22 for manufacturing the sound-absorbing element 10 will now be disclosed, with reference to figures 4 to 7.

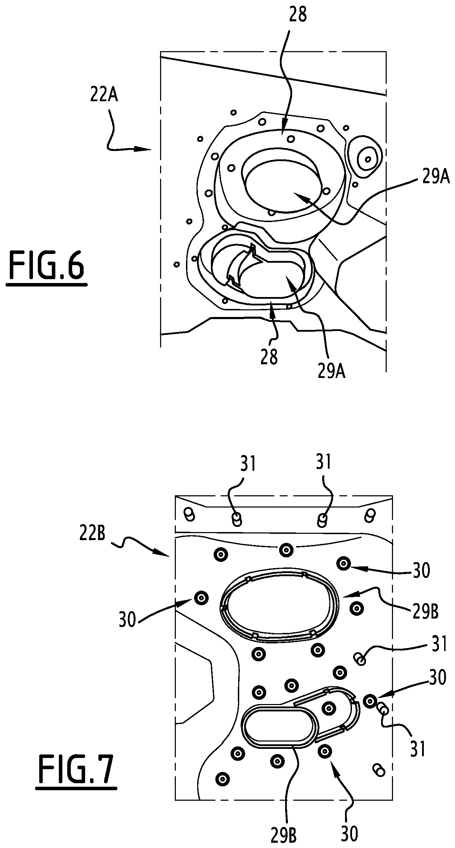

The mould device 22 comprises a first mould part 22A, more detailed on figure 6, and a second mould part 22B, more detailed on figure 7, complementary with the first mould part 22A. When assembled together, these first 22A and second 22B mould parts delimits together a shut mould cavity 24.

According to the invention, the first 22A and second 22B mould parts can be assembled together in two possible positions, said first and second positions. To this end, actuators are intended to apply a pressure on the second mould part 22B in order to apply it against the first mould part 22A.

More particularly, the distance between the first 22A and the second 22B mould parts is higher in the first position than in the second position. In other words, the actuators apply a lower pressure in the first position than in the second position.

These first and second positions will be more detailed later.

The first mould part 22A comprises a reception area 26 for receiving the heavy layer 12. More particularly, the fist face 12A of the heavy layer 12 is intended to be arranged against this reception area 26.

Preferably, the mould device 22 comprises means for pressing the heavy layer against the reception area 26. For instance, these pressing means comprise means for creating a vacuum between the heavy layer 12 and the first mould part 22A.

These pressing means are intended to press the heavy layer 12 against the reception area 26 so that this heavy layer 12, previously heated as disclosed later, takes a form complementary to the form of the reception area 26. In other words, these pressing means allows thermoforming the heavy layer 12.

In a usual manner, the second mould part 22B is provided with at least one injection duct (not shown) leading to the mould cavity 24. Material intended to form the foam 14 is usually injected in the mould cavity 24 through this injection duct.

According to the invention, the first mould part 22A comprises, in the reception area 26, at least one recess 28. This recess 28 is intended to be arranged in front of an aperture area of the heavy layer 12, when this heavy layer 12 is arranged on the reception area 26.

In the current disclosure, we call "aperture area" an area of the heavy layer 12 corresponding to a through aperture 16. More particularly, this area is called "aperture area" when the aperture is not cut, and is called "through aperture 16" when this aperture is cut. Thus, in the following disclosure, the wording "aperture area" refers to a same area as the wording "through aperture 16".

Dimensions of the recess 28 are wider than dimensions of said through aperture 16. More particularly, dimensions of the recess 28 correspond to dimensions of the seal element 18.

In a favourite embodiment, the through aperture 16 is cut inside the mould device 22. To this end, the first 22A and second 22B mould parts respectively comprise a first 29A and a second 29B complementary cutting elements intended to cut each aperture area into a through aperture 16 when these first 22A and second 22B mould parts are sufficiently compressed each other, i.e. are assembled in the second position.

More particularly, the first cutting element 29A is arranged on the first mould part 22A. For instance, this first cutting element 29A has a shape of a cylinder with a base having a curving shape, of the same shape as an inner outline of the sealing element 18. So, since this first cutting element 29A is arranged in the corresponding recess 28, this recess 28 has a shape of a ring around the first cutting element 29A.

It also should be noticed that this first cutting element 29A has also a function of supporting the aperture area of the heavy layer 12 when this heavy layer 12 is arranged on the reception area 26. This first cutting element 29A supports the heavy layer 12, preventing it to deform into the recess 28, during the thermoforming of the heavy layer 12 by the pressing means.

Besides, the second cutting element 29B is arranged on the second mould part 22B, so as to be arranged in front of the first cutting element 29A when the first 22A and second 22B mould parts are assembled. For instance, this second cutting element 29B has a shape of a ring, of a complementary shape with the shape of the through aperture 16, and with lateral dimensions that are slightly lower to outer lateral dimensions of the first cutting element 29A.

Thus, when the first 22A and second 22B mould parts are assembled in the first position, the second cutting element 29B comes in contact with the second face 12B of the heavy layer 12, and the first cutting element 29A is used as a support for the second cutting element 29B, so that the heavy layer 12 is pinched between these first 29A and second 29B cutting elements. Thus, this second cutting element 29B participates to maintain the heavy layer 12 against the first mould part 22A in this first position.

Besides, during injection of foam in the mould cavity 24, this second cutting element 29B prevents foam from filling the aperture area on the second face 12B of the heavy layer 12 in the area where it is not needed.

When the first 22A and second 22B mould parts are assembled in the second position, the second cutting element 29B is pushed through the heavy layer 12, until this second cutting element 29B be in contact with the first cutting element 29A. Thus, the edge of the second cutting element 29B complementary works with the surface of the first cutting element 29A so as to cut the heavy layer 12, realizing the through aperture 16.

Preferentially, the second mould part 22B comprises at least one strut element 31, protruding towards the second face 12B of the heavy layer 12. Each strut element 31 is preferentially arranged around the outline of the recess 28, so that the heavy layer 12 is pinched between the strut elements and the first mould part 22A when the mould cavity 24 is shut. This allows an improved maintaining of said outline area to prevent it to deform, in particular during the realization of the holes 20 and during the foam injection.

Preferentially, the lateral dimension of each of the strut elements are sufficiently low to avoid disrupting a flow of foam between these strut elements.

Besides, the second mould part 22B comprises at least one punch element 30, arranged in front of the recess 28 when the second mould part 22B is assembled with the first mould part 22A. Said punch element 30 comprises a rod 32 that is longitudinally movable between a retracted position and a deployed position. To this end, the punch element 30 comprises displacement means 34 for moving the rod 32. For instance, these displacement means 34 comprise a pneumatic plunger cylinder.

Preferentially, each rod 32 has a distal end 36 that is flat or slightly domed. More particularly, the distal end 36 is adapted for punching the heavy layer 12 to make a hole, not for piercing this heavy layer 12. In other words, each hole 20 is made by removing all the material corresponding to this hole 20. Thus, a scrap, corresponding to the material from the hole 20, remains in the recess 28 after punching this hole 20. As it will be disclosed later, this scrap is then imbedded in the foam forming the sealing element 18.

For instance, each rod 32 has a diameter equal to 12 mm.

Advantageously, each punch element 30 is laterally arranged near an outline of the corresponding recess 28, so that this outline supports the heavy layer 12 when punched. It should be noticed that the second cutting element 29B and the strut elements 31 also maintain the heavy layer 12 when punched.

Indeed, it should be noticed that, when the rod 32 hits the heavy layer 12, this rod 32 might deform the heavy layer 12 without succeeding in penetrating it, because this heavy layer 12 is still warm and very deformable.

However, since the punch elements 30 are arranged between the second cutting element 29B and the strut elements 31, the area of the heavy layer 12 that is intended to be punched by these punch elements 30 is efficiently maintained on the both sides, as shown on figure 4. Because of this efficiently maintaining on the both sides, the rod 32 can get across the heavy layer 12 without deforming it.

Preferentially, the mould device 22 comprises heating means for heating the heavy layer 12 and the foam 14 to optimal temperature during the moulding of this foam 14.

More particularly, the mould device 22 comprises first heating means for heating a first area of the first mould part 22A, corresponding to the recess 28, and second heating means for heating a second area of the first mould part 22A, corresponding to the rest of the reception area 26. Indeed, the recess 28, wherein the seal element 18 is moulded, needs to be heated more than the rest of the heavy layer 12. Preferentially, the first heating means are heated to 65°C, and the second heating means are heated to 55°C.

The mould device 22 also comprises third heating means for heating the second mould part 22B, intended to heat the foam 14. Preferentially, the third heating means are heated to 65°C. This third heating means can be connected to the first heating means, or in a variant can be independent from this first heating means.

For instance, each heating means comprise tubes conveying a heat transfer fluid, circulating in the corresponding mould part near the corresponding area.

A method for manufacturing the sound-absorbing element 10 will now be disclosed.

The method first comprises a step 100 of providing the first mould part 22A as previously disclosed.

The method then comprises a step 110 of heating the heavy layer 12, so as to have this heavy layer 12 deformable. To this end, the heavy layer 12 is arranged in an oven, and heated at a sufficient temperature so as to make it deformable.

The method then comprises a step 120 of arranging the first face 12A of the hot heavy layer 12 onto the reception area 26. It should be noticed that each aperture area of the heavy layer 12 is arranged in front of a corresponding recess 28 of the first mould part 22A, and rests on the corresponding first cutting element 29A.

The method then comprises a step 130 of pressing the heavy layer 12 against the reception area 26, for instance by creating a vacuum between the heavy layer 12 and the first mould part 22A. Since the heavy layer 12 is deformable, because it has been heated during the step of heating 120, and because it is kept hot by the first and second heating means, this heavy layer 12 takes a form complementary to the form of the reception area 26. In other words, this step 130 is a step of thermoforming the heavy layer 12.

The method then comprises a step 140 of providing the second mould part 22B, and assembling the second mould part 22B with the first mould part 22A so as to delimit the shut mould cavity 24 between them.

During this step 140, the first 22A and second 22B mould parts are assembled in the first position. In this first position, the second cutting element 29B comes in contact with the second face 12B of the heavy layer 12.

The method then comprises a step 150 of making at least one through hole 20 in the heavy layer 12, near each aperture area, so that each through hole 20 leads to the corresponding recess 28. Each through hole 20 is made by displacing the corresponding punch element 30 from its retracted position toward its deployed position, so as to punch the heavy layer 12 and thus to remove material from this heavy layer 12 to form the hole 20. It should be noted that scrap from this removing material then fells into the recess 28. Each punch element 30 is then returned to its retracted position, into a corresponding housing in the second mould part 22B.

The method then comprises a step 160 of injecting the foam through the injection duct of the second mould part 22B, towards the mould cavity 24, so that the foam 14 adheres to the second face 12B of the heavy layer 12. During this step, a part of the foam flows through the holes 20 so as to fill the recesses 28, and so that this part of foam filling each recess 28 adheres to the first face 22A of the heavy layer 12, forming the seal element 18. It should be reminded that the holes 20 are arranged so that the foam is homogeneously distributed in the recess 28.

Besides, since the through aperture 16 is not cut yet, the foam can expend in the recess 28 without escaping from this recess 28.

Because of the first and third heating means, the foam 14, 18 is kept at a temperature that is optimal for its realization.

It should be noticed that, during this step 160, the scraps that have fell into each recess 28 are drawn in the part of foam forming the corresponding seal element 18. Thus, these scraps will remain in the seal element 18. However, it appears that such scraps do not limit the efficiency of the seal element 18.

Preferentially, the step 160 is realized by injecting several foaming agents into the mould cavity 24, said foaming agents reacting together to form the foam 14. Thus, foam is fastened to the previously heated heavy layer 12, while this foam is formed by foaming agents reacting. For instance, the foaming agents are Isocyanate and Polyol.

The method then comprises a step 170 assembling the second mould part 22B with the first mould part 22A in the second position. To this end, the actuators are activated for high pressure.

As previously disclosed, in this second position, the first 29A and second 29B cutting elements cooperate together to cut the corresponding through aperture 16.

The method then comprises a usual finalisation step 180, comprising in particular degassing the foam 14, opening the mould device 22, and removing the finalized sound-absorbing element 10 from the mould device 22. The scrap corresponding to each cut through aperture 16 is also removed from the mould device 22.

It should be noticed that the invention is not limited to the embodiment disclosed above, but it can comprise several variant without escaping the scope of claims.

## Claims

1. A method for manufacturing a sound-absorbing element (10), in particular for a motor vehicle, wherein the said sound-absorbing element (10) comprises a sheet (12) having an area density between 1 and 8 kg/m², and a density 2000 kg/m³, called heavy layer (12), assembled with foam (14), and at least one through aperture (16), wherein the method comprises:
- a step (100) of providing a first mould part (22A), comprising a reception area (26) for receiving the heavy layer (12), said reception area (26) having at least one recess (28) whose lateral dimensions are wider than lateral dimensions of said through aperture (16),
- a step (120) of arranging a first face (12A) of the heavy layer (12) onto said reception area (26), so that an aperture area corresponding to the through aperture (16), the aperture area having the same area as the through aperture (16) when this through aperture (16) is not cut yet, is arranged in front of the recess (28),
- a step (140) of providing a second mould part (22B), and assembling the second mould part (22B) with the first mould part (22A) so as to delimit a shut mould cavity (24) between them, said second mould part (22B) being provided with at least one conduit leading to the mould cavity (24),
- a step (150) of making at least one through hole (20) in the heavy layer (12), near the area corresponding to the through aperture (16), so that each through hole (20) leads to the recess (28),
- a step (160) of injecting the foam (14) through the conduit towards the mould cavity (24), so that the foam (14) adheres to a second face (12B) of the heavy layer (12), while a part (18) of the foam flows through the through hole (20) so as to fill the recess (28), and so that this part of foam (18) filling the recess adheres to the first face (12A) of the heavy layer (12).

2. The method of manufacturing according to claim 1, comprising, before the step (120) of arranging the heavy layer (13) onto said reception area (26), a step (110) of heating the heavy layer (12), so as to have this heavy layer (12) deformable.

3. The method of manufacturing according to claim 2, comprising, after the step (120) of arranging the heavy layer (12) onto the reception area (26), a step (130) of pressing this heavy layer (12) against this reception area (26), for instance by creating a vacuum between the heavy layer (12) and the first mould part (22A).

4. A mould device (22), for performing a method of manufacturing according to any of claims 1 to 3, comprising:
- a first mould part (22A), comprising a reception area (26) for receiving the heavy layer (12),
- a second mould part (22B), complementary with the first mould part (22A), so as to delimit a shut mould cavity (24) with this first mould (22A) part when assembled together, said second mould part (22B) being provided with at least one conduit leading to the mould cavity (24),
wherein:
- the first mould part (22A) comprises, in the reception area (26), at least one recess (28) whose lateral dimensions are wider than a predefined length that is equal to the lateral dimensions of the through aperture (16) of the sound-absorbing element (10) to be manufactured,
- the second mould part (22B) comprises at least one punch element (30), arranged in front of the recess (28) when the second mould part (22B) is assembled with the first mould part (22A), said punch element (30) comprising a rod (32) longitudinally movable between a retracted position and a deployed position.

5. A mould device (22) according to claim 4, comprising means for pressing the heavy layer (12) against the reception area (26), for instance means for creating a vacuum between the heavy layer (12) and the first mould part (22A).

6. A mould device (22) according to claim 4 or 5, comprising:
- first heating means for heating a first area of the first mould part (22A), corresponding to the recess (28), and
- second heating means for heating a second area of the first mould part (22A), corresponding to the rest of the reception area (26).

7. A mould device (22) according to any of claims 4 to 6, wherein:
- the first mould part (22A) comprises a first cutting element (29A) arranged in the recess (28),
- the second mould part (22B) comprises a second cutting element (29B), complementary to the first cutting element (29A), arranged in front of this first cutting element (29A) when the first (22A) and second (22B) mould part are assembled together.

8. A mould device (22) according to claim 7, wherein the first (22A) and second (22B) mould part can be assembled in first and second position, so that:
- when an heavy layer (12) is arranged on the reception area (26), the second cutting element (29B) is in contact with this heavy layer when the first (22A) and second (22B) mould part are assembled in the first position, and
- the second cutting element (29B) is engaged with the first cutting element (29A) when the first (22A) and second (22B) mould part are assembled in the second position.

9. A mould device (22) according to any of claims 4 to 7, wherein the second mould part (22B) comprises at least one strut element (31), protruding towards first mould part (22A), each strut element (31) being arranged around the recess (28).

10. A sound-absorbing element (10), manufactured during a method according to any of claims 1 to 3, by means of a mould device according to any of claims 4 to 9, comprising a heavy layer (12) having a first face (12A) and a second face (12B) opposite to the first face (12A), and foam (14) fastened to the second face (12B), wherein the sound-absorbing element (10) has at least one through aperture (16), wherein:
- the heavy layer (12) has at least one through hole (20) near the through aperture (16),
- a part (18) of foam is fastened to the first face (12A), so as to form, on this first face (12A), a ring shaped seal element arranged around the through aperture (16),
- the foam (14) fastened to the second face (12B) is connected to the part of foam (18) fastened to the first face (12A) through the through hole (20).

## Patentansprüche

1. Ein Verfahren zur Herstellung eines Geräusch-absorbierenden Elements (10), insbesondere für ein Motorfahrzeug, wobei das Geräusch-absorbierende Element (10) eine als eine schwere Schicht (12) bezeichnete Platte (12), welche eine Flächendichte zwischen 1 und 8 kg/m² und eine Dichte von 2000 kg/m³ hat, welche mit einem Schaum (14) zusammengesetzt ist, und zumindest eine Durchgangsöffnung (16) aufweist, wobei das Verfahren aufweist:
- einen Schritt (100) des Bereitstellens eines ersten Formteils (22A), das eine Aufnahmefläche (26) zum Aufnehmen der schweren Schicht (12) aufweist, wobei die Aufnahmefläche (26) zumindest eine Aussparung (28) hat, deren Lateralabmessungen breiter sind als Lateralabmessungen der Durchgangsöffnung (16),
- einen Schritt (120) des Anordnens einer ersten Fläche (12A) der schweren Schicht (12) auf der Aufnahmefläche (26), sodass eine zur Durchgangsöffnung (16) korrespondierende Öffnungsfläche vor der Aussparung (28) angeordnet ist, wobei die Öffnungsfläche die gleiche Fläche wie die Durchgangsöffnung (16) hat, wenn diese Durchgangsöffnung (16) noch nicht geschnitten ist,
- einen Schritt (140) des Bereitstellens eines zweiten Formteils (22B) und des Zusammensetzens des zweiten Formteils (22B) mit dem ersten Formteil (22A), um eine geschlossene Formkavität (24) dazwischen zu begrenzen, wobei das zweite Formteil (22B) mit zumindest einer Leitung bereitgestellt ist, welche zur Formkavität (24) führt,
- einen Schritt (150) des Herstellens zumindest eines Durchgangslochs (20) in der schweren Schicht (12) in der Nähe der Fläche, welche zur Durchgangsöffnung (16) korrespondiert, sodass jedes Durchgangsloch (20) zur Aussparung (28) führt,
- einen Schritt (160) des Einspritzens des Schaums (14) durch die Leitung in Richtung zur Formkavität (24), sodass der Schaum (14) an einer zweiten Fläche (12B) der schweren Schicht (12) anhaftet, während ein Teil (18) des Schaums durch das Durchgangsloch (20) hindurchfließt, um die Aussparung (28) zu füllen, und sodass dieser Teil des Schaums (18), welcher die Aussparung füllt, an der ersten Fläche (12A) der schweren Schicht (12) anhaftet.

2. Das Verfahren des Herstellens gemäß Anspruch 1, aufweisend, vor dem Schritt (120) des Anordnens der schweren Schicht (12) auf der Aufnahmefläche (26), einen Schritt (110) des Heizens der schweren Schicht (12), um diese schwere Schicht (12) verformbar zu halten.

3. Das Verfahren des Herstellens gemäß Anspruch 2, aufweisend, nach dem Schritt (120) des Anordnens der schweren Schicht (12) auf der Aufnahmefläche (26), einen Schritt (130) des Drückens der schweren Schicht (12) gegen die Aufnahmefläche (26), beispielsweise durch Erzeugen eines Vakuums zwischen der schweren Schicht (12) und dem ersten Formteil (22A).

4. Eine Formvorrichtung (22) zum Ausführen eines Verfahrens des Herstellens gemäß irgendeinem der Ansprüche 1 bis 3, aufweisend:
- ein erstes Formteil (22A), das eine Aufnahmefläche (26) zum Aufnehmen der schweren Schicht (12) aufweist,
- ein zweites Formteil (22B), das zum ersten Formteil (22A) komplementär ist, um eine geschlossene Formkavität (24) mit dem ersten Formteil (22A) zu begrenzen, wenn sie zusammengesetzt sind, wobei das zweite Formteil (22B) mit zumindest einer Leitung bereitgestellt ist, welche zur Formkavität (24) führt, wobei:
- das erste Formteil (22A) in der Aufnahmefläche (26) zumindest eine Aussparung (28) aufweist, deren Lateralabmessungen breiter sind als eine vorbestimmte Länge, welche gleich zu den Lateralabmessungen der Durchgangsöffnung (16) des Geräusch-absorbierenden Elements (10) ist, welches herzustellen ist,
- das zweite Formteil (22B) zumindest ein Stempelelement (30) aufweist, welches vor der Aussparung (28) angeordnet ist, wenn das zweite Formteil (22B) mit dem ersten Formteil (22A) zusammengesetzt ist, wobei das Stempelelement (30) einen Stab (32) aufweist, welcher zwischen einer Rückzugsposition und einer Einsatzposition längs-bewegbar ist.

5. Eine Formvorrichtung (22) gemäß Anspruch 4, ein Mittel zum Drücken der schweren Schicht (12) gegen die Aufnahmefläche (26) aufweisend, beispielsweise ein Mittel zum Erzeugen eines Vakuums zwischen der schweren Schicht (12) und dem ersten Formteil (22A) .

6. Eine Formvorrichtung (22) gemäß Anspruch 4 oder 5, aufweisend:
- erste Heizmittel zum Heizen einer ersten Fläche des ersten Formteils (22A), welche zur Aussparung (28) korrespondieren, und
- zweite Heizmittel zum Heizen einer zweiten Fläche des ersten Formteils (22A), welche zum Rest der Aufnahmefläche (26) korrespondieren.

7. Eine Formvorrichtung (22) gemäß irgendeinem der Ansprüche 4 bis 6, wobei:
- das erste Formteil (22A) ein erstes Schneidelement (29A) aufweist, welches in der Aussparung (28) angeordnet ist,
- das zweite Formteil (22B) ein zum ersten Schneidelement (29A) komplementäres zweites Schneidelement (29B) aufweist, welches vor dem ersten Schneidelement (29A) angeordnet ist, wenn das erste (22A) und das zweite (22B) Formteil zusammengesetzt sind.

8. Eine Formvorrichtung (22) gemäß Anspruch 7, wobei das erste (22A) und das zweite (22B) Formteil in einer ersten und einer zweiten Position zusammengesetzt sein können, sodass:
- wenn eine schwere Schicht (12) auf der Aufnahmefläche (26) angeordnet ist, sich das zweite Schneidelement (29B) mit der schweren Schicht in Kontakt befindet, wenn das erste (22A) und das zweite (22B) Formteil in der ersten Position zusammengesetzt sind, und
- das zweite Schneidelement (29B) mit dem ersten Schneidelement (29A) eingreift, wenn das erste (22A) und das zweite (22B) Formteil in der zweiten Position zusammengesetzt sind.

9. Eine Formvorrichtung (22) gemäß irgendeinem der Ansprüche 4 bis 7, wobei das zweite Formteil (22B) zumindest ein Strebe-Element (31) aufweist, welches in Richtung zum ersten Formteil (22A) vorsteht, wobei jedes Strebe-Element (31) um die Aussparung (28) herum angeordnet ist.

10. Ein Geräusch-absorbierendes Element (10), welches während eines Verfahrens gemäß irgendeinem der Ansprüche 1 bis 3 mittels einer Formvorrichtung gemäß irgendeinem der Ansprüche 4 bis 9 hergestellt wird, aufweisend eine schwere Schicht (12), welche eine erste Fläche (12A) und eine zweite Fläche (12B) entgegengesetzt zur ersten Fläche (12A) hat, und einen Schaum (14), welcher an der zweiten Fläche (12B) befestigt ist, wobei das Geräusch-absorbierende Element (10) zumindest eine Durchgangsöffnung (16) hat, wobei:
- die schwere Schicht (12) zumindest ein Durchgangsloch (20) nahe der Durchgangsöffnung (16) hat,
- ein Teil (18) des Schaums an der ersten Fläche (12A) befestigt ist, um an der ersten Fläche (12A) ein ringförmiges Dichtungselement zu formen, welches um die Durchgangsöffnung (16) herum angeordnet ist,
- der Schaum (14), welcher an der zweiten Fläche (12B) befestigt ist, mit dem Teil des Schaums (18) durch das Durchgangsloch (20) hindurch verbunden ist, welcher an der ersten Fläche (12A) befestigt ist.

## Revendications

1. Procédé pour fabriquer un élément absorbant les sons (10), en particulier pour un véhicule automobile, dans lequel ledit élément absorbant les sons (10) comprend une feuille (12) ayant une densité de surface entre 1 et 8 kg/m², et une densité de 2000 kg/m³, appelée couche lourde (12), assemblée avec de la mousse (14), et au moins une ouverture traversante (16), le procédé comprenant :
- une étape (100) de fourniture d'une première partie de moule (22A), comprenant une zone de réception (26) pour recevoir la couche lourde (12), ladite zone de réception (26) comportant au moins un évidement (28) dont les dimensions latérales sont plus larges que les dimensions latérales de ladite ouverture traversante (16),
- une étape (120) d'agencement d'une première face (12A) de la couche lourde (12) sur ladite zone de réception (26), de sorte qu'une zone d'ouverture correspondant à l'ouverture traversante (16), la zone d'ouverture ayant la même aire que l'ouverture traversante (16) lorsque cette ouverture traversante (16) n'est pas encore découpée, soit agencée face à l'évidement (28),
- une étape (140) de fourniture d'une deuxième partie de moule (22B), et d'assemblage de la deuxième partie de moule (22B) avec la première partie de moule (22A) de manière à délimiter une cavité de moule fermée (24) entre elles, ladite deuxième partie de moule (22B) étant pourvue d'au moins un conduit conduisant à la cavité de moule (24),
- une étape (150) de réalisation d'au moins un trou traversant (20) dans la couche lourde (12), à proximité de la zone correspondant à l'ouverture traversante (16), de sorte que chaque trou traversant (20) mène à l'évidement (28),
- une étape (160) d'injection de la mousse (14) à travers le conduit vers la cavité de moule (24), de sorte que la mousse (14) adhère à une deuxième face (12B) de la couche lourde (12), tandis qu'une partie (18) de la mousse s'écoule à travers le trou traversant (20) de manière à remplir l'évidement (28), et de sorte que cette partie de la mousse (18) remplissant l'évidement adhère à la première face (12A) de la couche lourde (12).

2. Procédé de fabrication selon la revendication 1, comprenant, avant l'étape (120) d'agencement de la couche lourde (13) sur ladite zone de réception (26), une étape (110) de chauffage de la couche lourde (12), de manière à ce que cette couche lourde (12) puisse être déformée.

3. Procédé de fabrication selon la revendication 2, comprenant, après l'étape (120) d'agencement de la couche lourde (12) sur la zone de réception (26), une étape (130) de pression de cette couche lourde (12) contre cette zone de réception (26), par exemple en créant un vide entre la couche lourde (12) et la première partie de moule (22A).

4. Dispositif de moule (22), pour effectuer un procédé de fabrication selon l'une quelconque des revendications 1 à 3, comprenant :
- une première partie de moule (22A), comprenant une zone de réception (26) pour recevoir la couche lourde (12),
- une deuxième partie de moule (22B), complémentaire de la première partie de moule (22A), de manière à délimiter une cavité de moule fermée (24) avec cette première partie de moule (22A) lorsqu'elles sont assemblées l'une avec l'autre, ladite deuxième partie de moule (22B) étant pourvue d'au moins un conduit conduisant à la cavité de moule (24),
dans lequel :
- la première partie de moule (22A) comprend, dans la zone de réception (26), au moins un évidement (28) dont les dimensions latérales sont plus larges qu'une longueur prédéfinie qui est égale aux dimensions latérales de l'ouverture traversante (16) de l'élément absorbant les sons (10) à fabriquer,
- la deuxième partie de moule (22B) comprend au moins un élément de poinçon (30), agencé face à l'évidement (28) lorsque la deuxième partie de moule (22B) est assemblée avec la première partie de moule (22A), ledit élément de poinçon (30) comprenant une tige (32) qui peut être déplacée longitudinalement entre une position rétractée et une position déployée.

5. Dispositif de moule (22) selon la revendication 4, comprenant des moyens pour presser la couche lourde (12) contre la zone de réception (26), par exemple des moyens pour créer un vide entre la couche lourde (12) et la première partie de moule (22A).

6. Dispositif de moule (22) selon la revendication 4 ou 5, comprenant :
- des premiers moyens de chauffage pour chauffer une première zone de la première partie de moule (22A), correspondant à l'évidement (28), et
- des deuxièmes moyens de chauffage pour chauffer une deuxième zone de la première partie de moule (22A), correspondant au reste de la zone de réception (26).

7. Dispositif de moule (22) selon l'une quelconque des revendications 4 à 6, dans lequel :
- la première partie de moule (22A) comprend un premier élément de découpe (29A) agencé dans l'évidement (28),
- la deuxième partie de moule (22B) comprend un deuxième élément de découpe (29B), complémentaire du premier élément de découpe (29A), agencé face à ce premier élément de découpe (29A) lorsque les première (22A) et deuxième (22B) parties de moule sont assemblées l'une avec l'autre.

8. Dispositif de moule (22) selon la revendication 7, dans lequel les première (22A) et deuxième (22B) parties de moule peuvent être assemblées dans des première et deuxième positions, de sorte que :
- lorsqu'une couche lourde (12) est agencée sur la zone de réception (26), le deuxième élément de découpe (29B) soit en contact avec cette couche lourde lorsque les première (22A) et deuxième (22B) parties de moule sont assemblées dans la première position, et
- le deuxième élément de découpe (29B) soit en prise avec le premier élément de découpe (29A) lorsque les première (22A) et deuxième (22B) parties de moule sont assemblées dans la deuxième position.

9. Dispositif de moule (22) selon l'une quelconque des revendications 4 à 7, dans lequel la deuxième partie de moule (22B) comprend au moins un élément de montant (31), faisant saillie vers la première partie de moule (22A), chaque élément de montant (31) étant agencé autour de l'évidement (28).

10. Elément absorbant les sons (10), fabriqué pendant un procédé selon l'une quelconque des revendications 1 à 3, au moyen d'un dispositif de moule selon l'une quelconque des revendications 4 à 9, comprenant une couche lourde (12) comportant une première face (12A) et une deuxième face (12B) opposée à la première face (12A), et de la mousse (14) fixée à la deuxième face (12B), l'élément absorbant les sons (10) comportant au moins une ouverture traversante (16), dans lequel :
- la couche lourde (12) comporte au moins un trou traversant (20) à proximité de l'ouverture traversante (16),
- une partie (18) de mousse est fixée à la première face (12A), de manière à former, sur cette première face (12A), un élément d'étanchéité de forme annulaire agencé autour de l'ouverture traversante (16),
- la mousse (14) fixée à la deuxième face (12B) est reliée à la partie de mousse (18) fixée à la première face (12A) à travers le trou traversant (20).
